# EUROPEAN PATENT APPLICATION

(11) **EP 1 757 754 A2**
(43) Date of publication of application: **28.02.2007**
(21) Application number: 06012585.3
(22) Date of filing: 20.06.2006
(51) Int. Cl.: E04G 17/07

(54) **Plastic wedge with tangential metal support for the pressure positioning of the boards of a shell for masonry**

(30) Priority: 29.07.2005 IT PI20050086
(71) Applicant: Patents Production srl, 50051 Castelfiorentino (FI) (IT)
(72) Inventor: Giannoni, Oreste, 50053 Empoli (FI) (IT); Paolucci, Gino, 56038 Bientina (PI) (IT)
(74) Representative: Turini, Laura

(57) **Abstract**

This invention consists of a wedge made of plastic, provided with iron reinforcement on its oblique side, which is inserted into the holes of supporting tools, called hoops, that block the posts of the boards and/or the same boards of a shell for the realization of concrete masonry.

## Description

### Technical Field

The present invention concerns the technical sector relative to the production of tools for structural construction and similar, necessary for the preparation of reinforced concrete laying making foundations, brick walls, footings and/or bearers or vertical beams.

In particular, this invention relates to a wedge to be inserted in suitable longitudinal supports, also called hoops, which has the function to support the boards and/or the posts outside said boards during construction of the shell.

### Background Art

Different methods are used for the realization of concrete laying, no matter if they are going to make foundations or bearers, as well as brick walls, footings or other structures.

In brief, the current constructive technique can be described according to the following phases: possible preparation of the excavation; arrangement of the iron cage; placing of the timbering (so-called shell); concrete laying; removal of the timbering. Some construction methods proceed first with the timbering and later with the insertion of the iron cage, so making the process of correct shell more difficult.

The operation to make the shell is very important, because for a good result of the work, it's necessary to get a correct alignment of the panels or boards for the foundation beam and especially for the bearers and the brick walls.

The wooden boards, or the panels, must be fixed to the ground and often placed vertically one over the other, in order to cover greater heights than the height of the same board, which is obviously not bulky otherwise its shape and weight would prevent its easy utilisation by the workers.

In addition, the boards are externally supported by posts consisting of iron sheets provided with holes into which the "hoops" horizontally fit, said hoops consisting in their turn of iron sheets that are later fixed outside the post by means of wedges.

Said hoops, according to the prior art, are horizontally applied so as to cover the gap between one board and the opposite board of a shell. Said hoops extend out of the two boards and in the extension point fit into the hole of the opposite posts that make the end of the hoop come out. Said end of the hoop has a hole into which a wedge fits in order to keep the post still connected to the board.

In brief, this system is constituted by a longitudinal hoop, being proportionally as long as the largeness of the foundations to contain with the shell boards. This length is increased by external extensions, which have their start, at the end, with a tooth that develops in perpendicular direction to the same hoop, both on the upper and lower surface; this entails the supporting point of the boards that will be placed in contrast on it by the insertion of a wedge, which is inserted outside the board and inside suitable holes created on the external extensions of the hoop.

Firstly, concrete is laid inside the shell, then we remove the wedge, the posts and the wooden boards, finally the iron parts of the hoops remain in extension from the concrete construction.

According to the known art, said wedge can be made of any element, in iron or wood, which is inserted into the hole of the hoop and has the aim to keep the hoop still, in contrast with the board and/or the post.

The employment of wedges made ad hoc with occasional means, such as iron parts and wooden wedges, makes the work difficult even because of the difficulty to find the right element that can fit in pressure into said hole. Properly sized iron wedges are also used, they are inserted into said holes, but they have the relevant drawback of being heavy and difficult to use, as the iron is a material involving many drawbacks, for example it is subject to thermal dilation as well as heating and cooling. Thus the use of iron wedges, which must be handled by the worker, becomes difficult both in summer, when they suffer a great heating, and in winter, when on the contrary they cool down. For this reason, it's necessary to use gloves and specific protections that considerably slow down the work.

In addition, the weight of the iron prevents the worker from the possibility to carry with him a great number of wedges, as he cannot bear their weight. Consequently, the worker uses and inserts one wedge at a time, and every time takes the new one where they are stored.

Therefore, there is a need to realize a wedge that can be at the same time light, easy to handle, but however resistant to the pressures it may suffer during the construction of the shell.

The wedge is a basic element to guarantee the support of the boards that are placed one over the other, and to avoid, especially during the laying, they may shift from their position.

On the other hand, nowadays, it's not convenient to realize a wedge in a material different from the iron, since the pressure exerted by the wedge inside the hole of the "hoop" can, sometimes, make the same hole oval and even make the load in pressure not steady because of the tangential force that develops on the boards.

### Disclosure of invention

The present invention aims at avoiding the above-mentioned and other drawbacks, supplying a wedge made of plastic but with an iron support that implies the double advantage of lightness and resistance to the load.

We reached this result realizing a wedge with the characteristics described in the independent claims. Other characteristics of this invention are the object of dependent claims.

The advantages resulting from the present invention essentially consist of the fact that it's possible to increase the rigidity of at least one side of the wedge, thanks to the suitable longitudinal insertion, along this side, of a steel tube that is completely sunk into the same wedge, except indeed for the side that is object of dynamic contact with the hole; that however, as the metal tube is sunk into the plastic, there is no risk of rust, and consequently fewer risks of damages to the persons using these supports during the construction of the shell; that, as it is made of plastic but with metal core sunk by pressure casting, it owns such a characteristic of mechanical resistance that it wholly fulfils the load needs the object must bear both during construction and for containing the laying.

Reduced to its essential structure and with reference to the figures of the enclosed drawings, a wedge according to the present invention is made of plastic and includes a metal support on at least one of its sides.

By the term "wedge" we mean a prism of hard material inserted between two surfaces for blocking or countering their reciprocal pushes.

Said wedge is made of a sort of prism having a base of any shape, as long as it constitutes an element that can be fitted into the hole (5) of the above-mentioned hoop.

Said wedge (1) includes a sort of prism having the base of an irregular polygon made of a straight side (101) perpendicular to an upper side (81) and a lower side (91). From the opposite angle (92) of said lower side (91) the oblique side (110) starts and ends where it touches the side (111), preferably parallel with the side (81), which proceeds until it reaches the length of the side (81), as they are connected through the side (112) that unites the angle (113) of the side (111) with the angle (114) of the side (81). The connection between the side (110) and the side (111) is preferably a bend (115).

Preferably, said wedge has an extension (12) from the side (91).

The thickness of said wedge is variable, however proportional to the largeness (5a) of the hole (5).

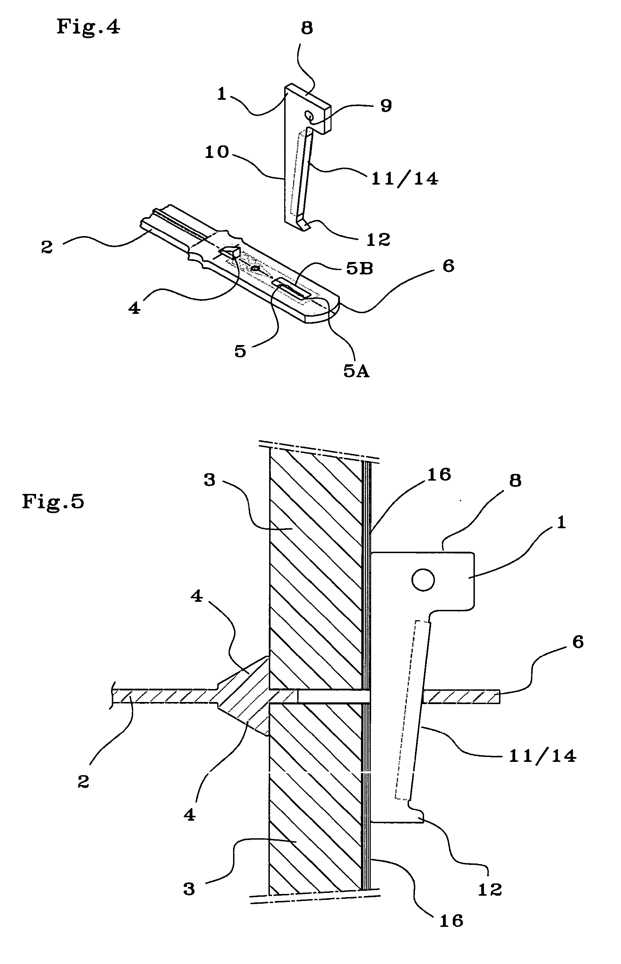

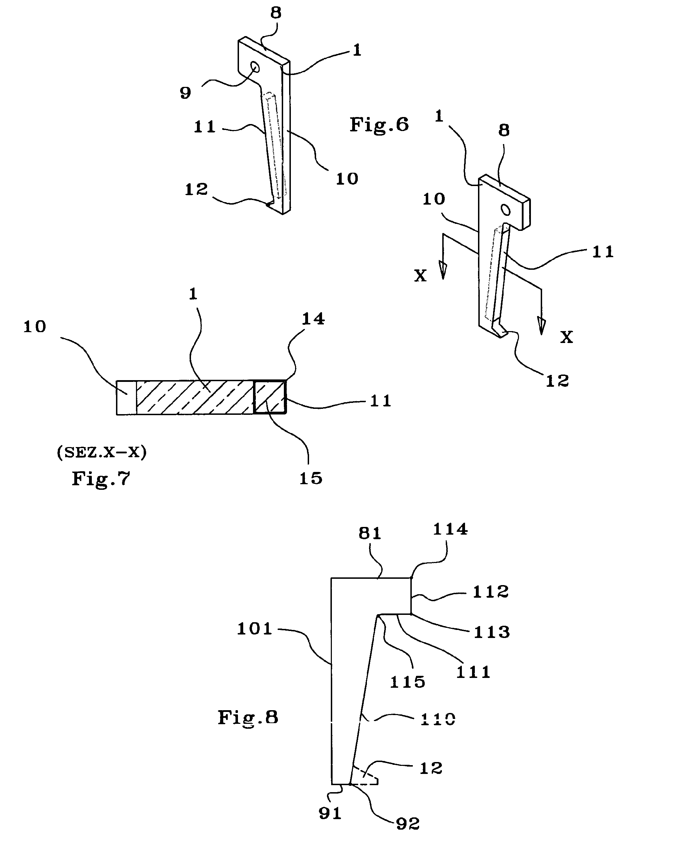

Said wedge takes the shape of Fig. 4 or 6.

Said wedge comprises an extended horizontal upper surface (8), in order to facilitate the insertion, and a vertical side (10), perpendicular to the upper surface (8), for supporting the boards, long enough to ensure a minimum alignment with the board. The side (11) opposite to the vertical side (10) is oblique and is designed to interact by pressure with the hole.

Conveniently, thanks to the angled shape of the side (11), we have a progressive pressure on the boards, until the end of the boards fits into the supporting tooth, on one part, while on the external part it's the same wedge with its oblique vertical side that fits into the hole, thus ensuring stability to the system.

Said oblique side has sunk by pressure casting a steel tube (14), so large as to be included in the thickness of the wedge, but placed so as to keep the metal line on the external side (11).

The lower portion of the wedge, opposite to the surface (8), with constant thickness but less wide, has an extension (12) that permits a better mechanical operation of removal.

Therefore, during the working phase, we have at least two boards (3), one upper and one lower, crossed by the hoop (2), placed in contrast with the extensions (4) thanks to the pressure exerted by the side (10) of the wedge (1), by means of the push it receives in the insertion from the progressively forced contact with the side (11), reinforced with the metal tube (14), with the hole placed at the external end (6) of the hoop (2).

Said wedge has a metal support on the oblique side (11°).

Said metal support can take any shape and possibly be provided also outside the wedge.

Preferably, said support (14) is made of a prism having square or rectangular section, hollow inside, so that it can be sunk in the plastic pressure casting and filled inside with plastic during the manufacturing of the piece. One side of said support extends outside, so that the oblique side (11) is constituted by a metal surface in contact with the hole (5).

Therefore, a wedge according to the present invention includes a longitudinal element in steel, more precisely a square tube, proportionally as long as the length of the diagonal side of the wedge, sunk inside it by pressure casting forming the whole necessary figure, so that one external side corresponds to the external line of the same diagonal side, so reinforcing its consistency and making its functional use and reuse safe.

The wedge is realized by plastic pressure casting, with metal core sunk inside. The fact it's made of plastic ensures a greater lightness compared with the iron wedges currently used and thus allows the worker to assemble the shell more rapidly and with less effort. The use of plastic, instead of iron, also avoids any risk of cuts to the worker, as the metal portion is entirely sunk inside, and avoids the rust, particularly dangerous for the persons who must handle these tools many times during the day.

The different material is particularly innovative, as in the field of masonry all the accessories are made of iron.

Conveniently, the thickness of the wedge is compatible with the thickness of the hole receiving it.

Conveniently, the wedge comprises an extension (8) on the top that allows the operator to easily work on it, possibly by means of a hammer, in order to fit the wedge into the hole (5) and block the boards in the desired position.

Conveniently, the wedge has a perpendicular vertical side (10), long enough to vertically align at least one board, preferably two boards one over the other. Conveniently, the wedge has a hole (9) on the top for the collection in a single support of several pieces, which can be reused by the worker, therefore easy to handle. In practice, said hole is used to receive a rope or other element that unites several wedges, so that the worker can take them with him during work, which is made possible thanks to the lightness of the piece.

Conveniently, the wedge has an angled side (11) that, by opposite contrast, acts on the hole of the hoop, causing a shift of the same wedge inside and therefore pressing the boards in position. It's indeed this side (11) that exerts a greater force compared to the others and therefore needs a reinforcement.

Conveniently, the angled side, particularly forced by effort, subject to wear and tear, is reinforced by a metal tube, sunk inside the wedge, longitudinally to said side, during the manufacturing of the piece.

Conveniently, the wedge has a lower extension (12) useful to remove it when the work is completed.

Conveniently, the construction in plastic pressure casting is suitable for mass production, as it rapidly amortizes the costs of the tools necessary for the production.

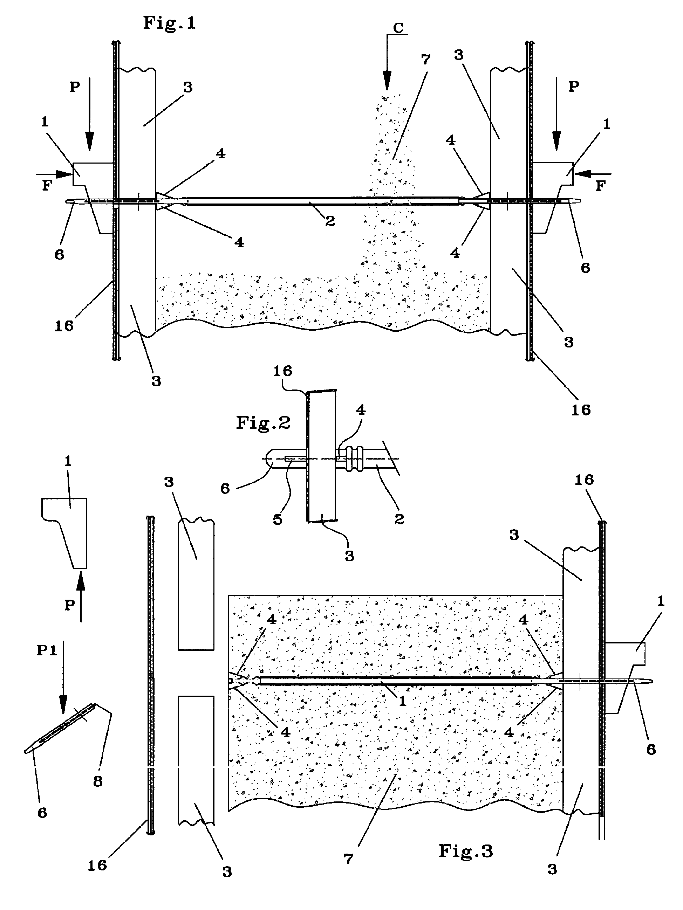

Conveniently, the hole (5) is less wide than the wedge (1) in its maximum size, so that after its vertical insertion (P) of Fig. 1, a similar tangential force (F) presses the board on the point (4), establishing its laying position.

Thus, the wedge generally has a prism aspect, with thickness compatible with the wideness of the hole, wherein the wideness of said hole (5) is approximately the average measure resulting from the least and maximum sizes of the distance between side (11) and side (10).

In the upper part, the wedge has a hole (9) that allows the worker to always carry with him a series of items, which can be inserted in a suitable spring hook, twine, iron wire or any other support: which results particularly useful because the wedges, differently from the hoops, can be reused in time.

In practice, the manufacturing details may however vary as regards shape, size, position of elements and type of materials used, but still remain within the range of the idea proposed as a solution and consequently within the limits of the protection granted by this patent for invention.

### Brief description of drawings

The advantages of the present invention will be better understood by every expert in this field by referring to the enclosed drawings, given as practical examples of the invention but not to be considered restrictive.

Figs. 1, 2 and 3 illustrate the working dynamic of the component that is object of the present invention, in order to better understand its distinctiveness.

Fig. 1 shows the crosswise section of the wedge (1), mounted on the support or hoop (2), in the positions fixed by the holes, outside the position of the boards (3) containing the concrete laying (7). Said boards (3) rest on the extensions (4) of the hoop (2) that thus define their longitudinal alignment and their lying on the same plane.

Fig. 2 shows a top view of the hole (5) being less wide than the wedge (1) in its maximum size, so that after its vertical insertion (P) of Fig. 1, a similar tangential force (F) presses the board on the point (4), establishing its laying position.

Fig. 3 shows how the wedge is removed (1/P), after the laying and the manufacturing, breaking the external part (6) of the hoop and so obtaining a smooth surface without metal materials.

Fig. 4 shows an exploded perspective view of the wedge (1) on the end of the hoop (2). The wedge is proportional to the wideness of the hole (5) and has a larger upper surface (8), in order to facilitate the insertion, and a vertical side (10), for supporting the boards, long enough to ensure a minimum alignment with the board. The opposite side (11), designed to interact by pressure with the hole, has sunk by pressure casting a steel tube (14), so large as to be included in the thickness of the wedge, but placed so as to keep the metal line on the external side (11), thus avoiding possible deformations.

Fig. 5 shows the working phase of the wedge. A crosswise section shows two boards (3), one over and one under the hoop (2), placed in contrast with the extensions (4) thanks to the pressure exerted by the side (10) of the wedge (1), by means of the push it receives in the insertion from the progressively forced contact with the side (11), reinforced with the metal tube (14), with the hole placed at the external end (6) of the hoop (2). A lower extension (12) of the wedge permits a better mechanical operation of removal.

Next Fig. 6 shows separately the two opposite wedges (1) during assembling, so as to illustrate all their parts. Thus, the wedge generally has a prism aspect, with thickness compatible with the wideness of the hole, wherein the wideness of said hole (5) is approximately the average measure resulting from the least and maximum sizes of the distance between side (11) and side (10). In the upper part, the wedge has a hole (9) that allows the worker to always carry with him a series of items, which can be inserted in a suitable spring hook, twine, iron wire or any other support: which results particularly useful because the wedges, differently from the hoops, can be reused in time. The side (10), as already mentioned, is suitably vertical as it has the aim of pressing simultaneously the two boards, upper and lower, in linear way, so as to obtain the same vertical plumb line. On the contrary, the opposite side that is in contact with the hole and receives the push from the wedge, therefore subject to wear and tear, is provided with the metal (steel) tube sunk inside, leaving uncovered just the external side (11) that is indeed placed in contrast. The lower portion (12), with constant thickness but less wide, has however an extension that facilitates the removal.

The position of the steel tube (14) along the oblique side (11) is depicted in the section of Fig. 7, showing the plastic casting forming the whole body (1), into which the tube (14) is sunk, in such a direction that its external outline corresponds to the external line of the oblique side (11), opposite to the vertical side (10). The tube is filled inside with plastic (15) during the manufacturing of the same wedge.

Fig. 8 shows that said wedge (1) consists of a sort of prism having the base of an irregular polygon made of a straight side (101) perpendicular to an upper side (81) and a lower side (91). From the opposite angle (92) of said lower side (91) the oblique side (110) starts and ends where it touches the side (111), preferably parallel with the side (81), which proceeds until it reaches the length of the side (81), as they are connected through the side (112) that unites the angle (113) of the side (111) with the angle (114) of the side (81). The connection between the side (110) and the side (111) is preferably a bend (115).

## Claims

1. Wedge that fits into the hole of a support for the posts of the boards and/or for the same boards of a shell for a concrete masonry, **characterized in that** it is made of plastic and is provided with an iron reinforcement on at least one of its sides.

2. Wedge as claimed in claim 1, **characterized in that** it comprises a horizontal upper surface (8), a vertical side (10), perpendicular to the upper surface (8), for supporting the boards, and an oblique side (11), opposite to the vertical side (10), designed to interact by pressure with the hole.

3. Wedge having one or more characteristics of any of the claims from 1 to 2, **characterized in that** said oblique side has sunk by pressure casting a steel tube (14), so large as to be included in the thickness of the wedge.

4. Wedge having one or more characteristics of any of the claims from 1 to 3, **characterized in that** said oblique side (11) includes a steel tube (14) that keeps one of its metal surfaces on the external side (11).

5. Wedge having one or more characteristics of any of the claims from 1 to 4, **characterized in that** it includes a lower surface, opposite to the surface (8) and less wide than it.

6. Wedge having one or more characteristics of any of the claims from 1 to 5, **characterized in that** its lower portion, opposite to the surface (8), has an extension (12) that permits a better mechanical operation of removal.

7. Wedge having one or more characteristics of any of the claims from 1 to 6, **characterized in that** it consists of a sort of prism having the base of an irregular polygon made of a straight side (101) perpendicular to an upper side (81) and a lower side (91). From the opposite angle (92) of said lower side (91) the oblique side (110) starts and ends where it touches the side (111), preferably parallel with the side (81), which proceeds until it reaches the length of the side (81), as they are connected through the side (112) that unites the angle (113) of the side (111) with the angle (114) of the side (81).

8. Wedge having one or more characteristics of any of the claims from 1 to 7, **characterized in that** the connection between the side (110) and the side (111) is preferably a bend (115).

9. Wedge having one or more characteristics of any of the claims from 1 to 8, **characterized in that** it has preferably an extension (12) from the side (91).

10. Wedge having one or more characteristics of any of the claims from 1 to 9, **characterized in that** its thickness is variable, however proportional to the largeness (5a) of the hole (5).

11. Wedge having one or more characteristics of any of the claims from 1 to 10, **characterized in that** said reinforcement (14) is made of a prism having square or rectangular section, hollow inside, so that it can be sunk in the plastic pressure casting and filled inside with plastic during the manufacturing of the piece.

12. Wedge having one or more characteristics of any of the claims from 1 to 11, **characterized in that** it includes a longitudinal element in steel, proportionally as long as the length of the diagonal side (11) of the wedge, sunk inside it by pressure casting forming the whole necessary figure, so that one external side corresponds to the external line of the same diagonal side.

13. Wedge having one or more characteristics of any of the claims from 1 to 12, **characterized in that** it has a hole (9) for the collection in a single support of several wedges.

14. Wedge having one or more characteristics of any of the claims from 1 to 13, **characterized in that** it has a lower extension (12) useful to remove it when the work is completed.

15. Wedge having one or more characteristics of any of the claims from 1 to 14, **characterized in that** the hole (5) is less wide than the wedge (1) in its maximum size.
